# EUROPÄISCHE PATENTSCHRIFT

(11) **EP 4 450 434 B1**
(45) Veröffentlichungstag und Bekanntmachung des Hinweises auf die Patenterteilung: **16.04.2025**
(21) Anmeldenummer: 23214904.7
(22) Anmeldetag: 07.12.2023
(51) Int. Cl.: B65H 5/22, B65H 29/24, B65H 5/02, B65H 29/16, B65H 99/00, B65G 47/53

(54) **FÖRDERANLAGE FÜR EINEN LIEGENDEN TRANSPORT VON BLECHTAFELN**
CONVEYOR SYSTEM FOR A HORIZONTAL TRANSPORT OF SHEET METAL PLATES
INSTALLATION DE TRANSPORT POUR LE TRANSPORT HORIZONTAL DE TÔLES

(30) Priorität: 20.04.2023 DE 102023110016
(43) Veröffentlichungstag der Anmeldung: 23.10.2024
(73) Patentinhaber: Koenig & Bauer AG, 97080 Würzburg (DE)
(72) Erfinder: Michel, Björn, 70193 Stuttgart (DE); Fischer, Steffen, 73630 Remshalden (DE)
(74) Vertreter: Koenig & Bauer AG

(56) Entgegenhaltungen:
- EP-A1- 3 763 646
- EP-A1- 3 889 087
- DE-A1- 3 711 584
- US-A1- 2020 298 594

## Beschreibung

Die Erfindung betrifft eine Förderanlage für einen liegenden Transport von Blechtafeln gemäß dem Oberbegriff des Anspruches 1.

Bei der Produktion von Blechverpackungen, d. h. beim Blechverpackungsdruck, werden Blechtafeln industriell in einer Massenproduktion mit einer Produktionsgeschwindigkeit von mehreren tausend Blechtafeln pro Stunde, z. B. von mindestens 6.000 Blechtafeln pro Stunde bedruckt und/oder lackiert. Entsprechend ist ein Fördervolumen einer die Blechtafeln zwischen verschiedenen Bearbeitungsstationen einer Produktionsanlage transportierenden Förderanlage auszulegen. In der Praxis hat sich gezeigt, dass eine als ein Kettenförderer ausgebildete Förderanlage oder eine Förderanlage mit Rollbahnen für dieses bei der Produktion von Blechverpackungen erforderliche Fördervolumen nicht geeignet sind, da als Ketten und Rollen ausgebildete Transportmittel die zu fördernden Blechtafeln "springen" lassen und somit zu einem unruhigen Tafeltransport führen.

Durch die DE 10 2019 118 647 B3 ist eine mehrere verschiedene Maschineneinheiten aufweisende Produktionslinie zur Bearbeitung von Blechtafeln bekannt, wobei ein Transportweg der Blechtafeln durch diese Produktionslinie linear ausgebildet ist, wobei als Maschineneinheiten in Transportrichtung zu bearbeitender Blechtafeln aufeinanderfolgend eine Blechdruckmaschine und/oder eine Lackiermaschine und/oder eine Beladestation und/oder ein Trockner und/oder eine Entladestation vorgesehen sind, wobei mindestens zwei Maschineneinheiten jeweils mindestens eine Transporteinrichtung zum Transportieren mindestens einer jeweils einzeln auf einer Transportebene aufliegenden Blechtafel aufweisen.

Durch die DE 10 2021 129 341 B3 ist eine Produktionslinie zur Bearbeitung von Blechtafeln bekannt, aufweisend eine Blechdruckmaschine und/oder eine Lackiermaschine, wobei die Blechtafeln mittels Transportriemen aufweisender Transporteinrichtungen entlang eines linearen Transportweges transportiert werden.

Durch die DE 37 11 584 A1 ist eine Vorrichtung zum Querabfördern von Stapeln aus blattförmigem Material bekannt, insbesondere von Papierstapeln, die von einem Zuförderer zugeführt und auf einen im Wesentlichen in einem rechten Winkel zum Zuförderer verlaufenden Abförderer überführt werden, wobei ein die Papierstapel einerseits vom Zuförderer übernehmender und andererseits an den Abförderer übergebender, diskontinuierlich antreibbarer Überführungsförderer vorgesehen ist, welcher mit in einer Stillstandsphase die Auflagefläche der Papierstapel beaufschlagenden Blasluftmitteln ausgestattet ist.

Durch die US 4,324,522 A ist eine Maschine zur Handhabung von Metallblechen bekannt, die durch einen Bandzuführförderer mit einer Bandspannanordnung und einer Halterung gekennzeichnet ist, wobei die Halterung es ermöglicht, die Bandelemente seitlich von der Maschine zum Austausch leicht zu entfernen, wobei vorderen Endabschnitten in ihrer Betriebsstellung ein Schwenken zwischen zwei verschiedenen Ebenen ermöglicht wird, wobei die normale angehobene Position den Vorschub der Bleche über ein schwenkbares Tor zu einem horizontalen Übertragsförderer ermöglicht, wobei der Übertragsförderer die Bleche über einen Ausschuss-Stapelbereich zur Ablage in einem oder mehreren nach vorne beabstandeten Stapelbereichen befördert, und wobei die abgesenkte Position eines Endabschnitts des Förderers es ermöglicht, dass Bleche zu einem nach unten und vorne geneigten Förderer transportiert werden können, der zu einem Ausschuss-Stapelbereich führt, wobei das schwenkbare Tor in abgesenkter Position dazu dient, die Lücke zwischen dem Auslassende des Zufuhrförderers und dem Eingangsende des Übertragsförderer zu überbrücken und wobei das Tor in der angehobenen Position den Spalt öffnet und den Zugang zum geneigten Ausschussförderer ermöglicht, wenn der Endabschnitt des Zufuhrförderers in die abgesenkte Position geschwenkt wird.

Durch die EP 3 889 087 A1 ist eine Sammel- und Weiterfördervorrichtung zum Sammeln und Weiterfördern von blattförmigen Druckereiprodukten bekannt, vorzugsweise von ungehefteten Stapeln aus blattförmigen Druckereiprodukten, wie z. B. Papier, insbesondere Planobogen, Karton oder dergleichen, zu einer stromabwärtigen Förderstrecke und/oder zu einer stromabwärtig die Druckereiprodukte weiter bearbeitenden Vorrichtung, mit einem Gehäuse und Zufördermitteln für die Zufuhr der Druckereiprodukte in die Sammel- und Weiterfördervorrichtung und Weiterfördermitteln für deren Weiterförderung, wobei die Weiterförderrichtung der Weiterfördermittel quer zur Förderrichtung der Zufördermittel für die zu sammelnden und zu fördernden Druckereiprodukte gerichtet ist.

Der Erfindung liegt die Aufgabe zugrunde, eine Förderanlage für einen liegenden Transport von Blechtafeln zu schaffen, mit der zwischen verschiedenen Bearbeitungsstationen einer Produktionsanlage zu transportierende Blechtafeln auch bei einem Fördervolumen von mehreren tausend Blechtafeln pro Stunde ruhig und störungsfrei transportierbar sind.

Die Aufgabe wird erfindungsgemäß durch die Merkmale des Anspruches 1 gelöst. Die abhängigen Ansprüche betreffen vorteilhafte Ausgestaltungen und/oder Weiterbildungen der gefundenen Lösung.

Die mit der Erfindung erzielbaren Vorteile bestehen insbesondere darin, dass zwischen verschiedenen Bearbeitungsstationen einer Produktionsanlage zu transportierende Blechtafeln auch bei einem Fördervolumen von mehreren tausend Blechtafeln pro Stunde ruhig und störungsfrei transportierbar sind. Weitere Vorteile sind aus der nachfolgenden Beschreibung ersichtlich.

Ein Ausführungsbeispiel der Erfindung ist in den Zeichnungen dargestellt und wird im Folgenden näher beschrieben.

Es zeigen:
- Fig. 1: eine Förderanlage für Blechtafeln mit zwei rechtwinklig zueinander angeordneten Transportstrecken;
- Fig. 2: einen Ausschnitt aus der in der Fig. 1 dargestellten Förderanlage;
- Fig. 3: die Förderanlage der Fig. 1 mit einer Schwenkeinrichtung, um mindestens einen der Transportriemen der zweiten Transportstrecke höhenvariabel relativ zur ersten Transportstrecke einzustellen;
- Fig. 4: die erste Transportstrecke in einer ersten Betriebsstellung;
- Fig. 5: die erste Transportstrecke in einer von der ersten Betriebsstellung in einer Höheneinstellung veränderten zweiten Betriebsstellung.

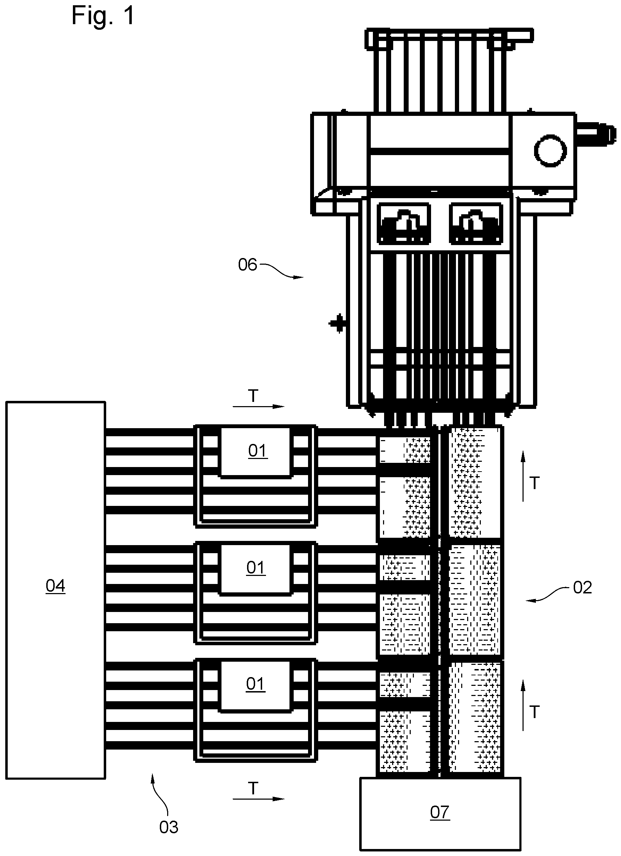

Fig. 1 zeigt in einer Draufsicht beispielhaft eine Förderanlage für einen liegenden Transport von vorzugsweise rechteckig ausgebildeten Blechtafeln 01, wobei diese Förderanlage in einer vorzugsweise horizontalen Transportebene eine erste lineare Transportstrecke 02 und mindestens eine zweite lineare Transportstrecke 03 aufweist, wobei die mindestens eine zweite lineare Transportstrecke 03 in der Transportebene rechtwinklig zur ersten linearen Transportstrecke 02 angeordnet ist. In einer bevorzugten Ausführung dieser Förderanlage sind mehrere, z. B. drei zweite lineare Transportstrecken 03 vorgesehen, die parallel zueinander jeweils rechtwinklig zur ersten linearen Transportstrecke 02 angeordnet sind. Die zweite lineare Transportstrecke 03 kann daher - wie in der Fig. 1 dargestellt - mehrspurig, insbesondere dreispurig ausgebildet sein. Eine auf der betreffenden zweiten Transportstrecke 03 liegend transportierte Blechtafel 01 wird der ersten Transportstrecke 02 in der Transportebene rotationsfrei, d. h. ohne Ausführung einer Drehbewegung in der Transportebene zugeführt. Die vorgeschlagene Förderanlage wird vorzugsweise in einem industriellen Prozess in einer Produktionslinie zur Bearbeitung von Blechtafeln 01 in einer Massenproduktion mit einer Produktionsgeschwindigkeit von mehreren tausend Blechtafeln 01 pro Stunde verwendet.

Die erste lineare Transportstrecke 02 ist als eine Durchtransportstrecke ausgebildet. Jede der zweiten linearen Transportstrecken 03 bildet jeweils eine Zuführtransportstrecke und ist in der Förderanlage derart angeordnet, dass sie eine von einer ersten Bearbeitungsstation 04 kommende Blechtafel 01 in einer linearen Bewegung der ersten linearen Transportstrecke 02 zuführt und damit aus der ersten Bearbeitungsstation 04 kommende Blechtafeln 01 jeweils abführt. Jede von einer der zweiten linearen Transportstrecken 03 der ersten linearen Transportstrecke 02 zugeführte Blechtafel 01 wird unter Beibehaltung ihrer jeweiligen Ausrichtung in der Transportebene auf der ersten linearen Transportstrecke 02 in einer orthogonal zur zweiten Transportstrecke 03 gerichteten linearen Bewegung weitertransportiert und z. B. einer zweiten Bearbeitungsstation 06 zugeführt. Am der zweiten Bearbeitungsstation 06 gegenüberliegenden Ende der ersten linearen Transportstrecke 02 ist z. B. eine dritte Bearbeitungsstation 07 angeordnet, so dass Blechtafeln 01 auf der als eine Durchtransportstrecke ausgebildeten ersten linearen Transportstrecke 02 von der dritten Bearbeitungsstation 07 geradlinig ohne einen Richtungswechsel in der Bewegung der zweiten Bearbeitungsstation 06 zugeführt werden können. In der bevorzugten Verwendung der vorgeschlagenen Förderanlage ist die erste Bearbeitungsstation 04 z. B. als eine Blechdruckmaschine ausgebildet, insbesondere als eine in einem Inkjet-Druckverfahren druckende Druckmaschine, aus welcher bedruckte Blechtafeln 01 insbesondere mehrspurig abtransportiert werden können. Die zweite Bearbeitungsstation 06 ist z. B. als eine Blechlackiermaschine ausgebildet, in welcher Blechtafeln 01 vollflächig oder zumindest teilflächig überlackiert werden können. Die dritte Bearbeitungsstation 07 ist z. B. als ein Anleger ausgebildet, von welchem aus dort z. B. in einem Stapel vorgehaltene insbesondere unbedruckte Blechtafeln 01 über die erste lineare Transportstrecke 02 der z. B. als eine Blechlackiermaschine ausgebildeten zweiten Bearbeitungsstation 06 zuführbar sind bzw. zugeführt werden. Die jeweilige Bewegungsrichtung der betreffenden Blechtafeln 01 ist in der Fig. 1 jeweils durch einen in Transportrichtung T der Blechtafeln 01 weisenden Richtungspfeil angedeutet.

Die mittels der vorgeschlagenen Förderanlage zu fördernden vorzugsweise rechteckigen Blechtafeln 01 weisen ein durch ihr jeweiliges Kantenmaß festgelegtes Format z. B. zwischen 500 mm x 650 mm und 950 mm x 1.900 mm auf, so dass durch diese Kantenmaße für die von der vorgeschlagenen Förderanlage zu transportierenden Blechtafeln 01 ein Minimalformat und ein Maximalformat festgelegt sind. In der Fig. 1 sind die jeweils äußeren Konturen des Minimalformats und des Maximalformats z. B. bei von der ersten Bearbeitungsstation 04 abgeführten Blechtafeln 01 angedeutet. Die zu transportierenden Blechtafeln 01 haben jeweils eine Blechdicke z. B. zwischen 0,1 mm und 1,0 mm, vorzugsweise zwischen 0,14 mm und 0,5 mm. Jede einzelne dieser Blechtafeln 01 kann je nach ihrem Format und ihrem Werkstoff, d. h. je nachdem, ob sie z. B. aus verzinntem Stahlblech oder zinnfreiem Stahlblech oder aus Aluminium bestehen, eine Masse z. B. von einigen hundert Gramm bis hin zu einigen Kilogramm, z. B. von mindestens 300 Gramm bis zu fünf Kilogramm oder mehr aufweisen.

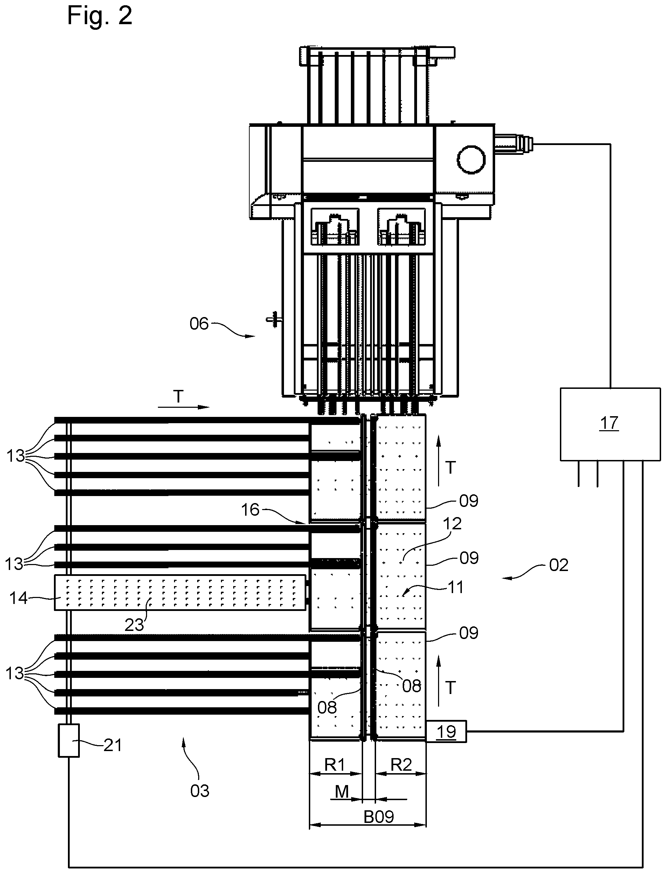

Die erste lineare Transportstrecke 02 ist als eine tischförmige Transporteinrichtung ausgebildet und weist in ihrem sich längs zur Transportrichtung T der Blechtafeln 01 erstreckenden Mittenbereich M mindestens einen von einem elektrischen ersten Antrieb 19 angetriebenen kontinuierlich oder getaktet umlaufenden Transportriemen 08 auf. Vorzugsweise sind in diesem Mittenbereich M - wie in der Fig. 2 dargestellt - zwei parallel zueinander angeordnete Transportriemen 08 vorgesehen, die von dem elektrischen ersten Antrieb 19 angetrieben kontinuierlich oder getaktet im Gleichlauf umlaufen. Der oder die Transportriemen 08 ist bzw. sind jeweils z. B. als ein insbesondere aus einem flexiblen Material bestehender Flachriemen in Form einer Endlosschleife ausgebildet. Die z. B. zwischen 1 mm und 5 mm, vorzugsweise etwa 2 mm dicken Flachriemen haben eine Breite z. B. zwischen 30 mm und 250 mm, vorzugsweise etwa 40 mm oder 80 mm. Die als tischförmige Transporteinrichtung ausgebildete erste Transportstrecke 02 weist mindestens eine in der Transportebene der Blechtafeln 01 vorzugsweise ortsfest angeordnete ebene massive Platte 09 auf, deren sich jeweils quer zur Transportrichtung T der Blechtafeln 01 erstreckende Breite B09 mindestens ebenso groß ist wie die Breite des Maximalformats der zu transportierenden Blechtafeln 01. Der sich längs zur Transportrichtung T der Blechtafeln 01 erstreckende streifenförmig ausgebildete Mittenbereich M der ersten Transportstrecke 02 erstreckt sich mit seiner schmalen Seite z. B. über maximal 40% der Breite B09 der jeweiligen Platte 09 dieser die erste Transportstrecke 02 bildenden Transporteinrichtung, insbesondere über nur 10% bis 20% der Breite B09 dieser Platte 09.

Die zum Halten einer auf dem betreffenden Transportriemen 08 aufliegenden Blechtafel 01 erforderliche Haltekraft erfolgt vorzugsweise durch einen Sog, wobei der erforderliche Sog z. B. durch einen unterhalb der Platte 09 der die erste Transportstrecke 02 bildenden Transporteinrichtung angeordneten Saugkasten in Verbindung mit einer daran angeschlossenen Saugpumpe erzeugt wird. Dieser Sog wirkt nur durch eine Perforierung in dem betreffenden Transportriemen 08 der die erste Transportstrecke 02 bildenden Transporteinrichtung und ist damit lokal eng begrenzt. Die mit dem Saugkasten verbundene Saugpumpe ist von einer Steuereinheit 17 vorzugsweise bedarfsweise angeschaltet und/oder abgeschaltet oder zumindest anschaltbar und/oder abschaltbar. Alternativ oder zusätzlich können zum kraftschlüssigen Halten einer auf dem betreffenden Transportriemen 08 aufliegenden Blechtafel 01 auch elektromagnetische Haltemittel vorgesehen sein, die vorzugsweise ebenfalls von der Steuereinheit 17 schaltbar sind. Im Fall einer Verwendung von nur elektromagnetischen Haltemitteln ist eine Perforation in dem betreffenden Transportriemen 08 der die erste Transportstrecke 02 bildenden Transporteinrichtung nicht erforderlich. Die Steuereinheit 17 ist z. B. durch eine Maschinensteuerung der Förderanlage realisiert. Die Steuereinheit 17 ist ein Bestandteil der Förderanlage und steuert mehrere Prozesse dieser Förderanlage, insbesondere verschiedene Bewegungsabläufe in dieser Förderanlage.

Die mindestens eine Platte 09 der die erste Transportstrecke 02 bildenden Transporteinrichtung weist an beiden Seiten ihres jeweiligen Mittenbereichs M jeweils einen riemenfreien Randbereich R1; R2 auf, wobei diese Randbereiche R1; R2 eine sich quer zur Transportrichtung T der Blechtafeln 01 erstreckende vorzugsweise gleich große Breite aufweisen und bezüglich einer Längserstreckung der betreffenden Transporteinrichtung vorzugsweise symmetrisch angeordnet sind. Zumindest in den riemenfreien Randbereichen R1; R2, z. B. aber auch zusätzlich im Mittenbereich M der betreffenden Transporteinrichtung sind jeweils mindestens ein Düsenfeld 11 mit jeweils mehreren Düsen 12 ausgebildet. Die dort in der Platte 09 der die erste Transportstrecke 02 bildenden Transporteinrichtung angeordneten Düsen 12 sind derart betrieben, dass aus ihnen zur Ausbildung eines Luftkissens kontinuierlich oder in einem Takt gesteuert jeweils Blasluft gegen die Unterseite einer auf dem mindestens einen Transportriemen 08 der betreffenden Transporteinrichtung aufliegenden und auf dem oder den betreffenden Transportriemen 08 gehaltenen Blechtafel 01 geblasen wird. Auf diese Weise erfolgt der Transport einer auf dem betreffenden Transportriemen 08 aufliegenden Blechtafel 01 in der Transportebene, d. h. insbesondere mit Bezug auf die Platte 09 der die erste Transportstrecke 02 bildenden Transporteinrichtung jeweils weitestgehend auf einem Luftkissen schwebend und ist damit nahezu reibungsfrei, zumindest aber äußerst reibungsarm und praktisch schlupffrei, denn die jeweiligen Blechtafeln 01 stehen nur mit den vergleichsweise schmalen Transportriemen 08 in einem Berührungskontakt. Zur Erzeugung der aus den jeweiligen Düsen 12 ausströmenden Blasluft ist zumindest im Bereich des jeweiligen Düsenfeldes 11 unterhalb der jeweiligen Platte 09 der die erste Transportstrecke 02 bildenden Transporteinrichtung mindestens ein jeweils mit einer Druckluftquelle verbundener Blasluftkasten angeordnet.

In einer vorteilhaften Ausführung der ersten Transportstrecke 02 sind zumindest einige der Düsen 12 der Düsenfelder 11 z. B. jeweils als Venturidüsen ausgebildet. In den jeweiligen Düsenfeldern 11 sind z. B. eine erste Teilmenge einzelner Düsen 12 und/oder eine zweite Teilmenge einzelner Düsen 12 jeweils derart angeordnet, dass die erste Teilmenge von Düsen 12 die Blasluft kontinuierlich jeweils in Transportrichtung T der Blechtafeln 01 unter einem spitzen Winkel schräg nach außen gerichtet, d. h. jeweils in Richtung des nächstgelegenen sich längs zur Transportrichtung T der Blechtafeln 01 erstreckenden Randes der betreffenden Transporteinrichtung und/oder die zweite Teilmenge von Düsen 12 die Blasluft kontinuierlich oder in einem Takt gesteuert jeweils senkrecht nach oben gegen die Unterseite einer auf dem mindestens einen Transportriemen 08 der betreffenden Transporteinrichtung aufliegenden und auf dem oder den betreffenden Transportriemen 08 gehaltenen Blechtafel 01 ausblasen.

Fig. 2 zeigt einen Ausschnitt aus der in der Fig. 1 dargestellten Draufsicht auf die vorgeschlagene Förderanlage. In diesem Ausführungsbeispiel der Förderanlage sind drei vorzugsweise im Wesentlichen identisch ausgebildete zweite Transportstrecken 03 parallel zueinander angeordnet. Sie sind jeweils unmittelbar an einer Längsseite der als tischförmige Transporteinrichtung ausgebildeten ersten Transportstrecke 02 angestellt. Jede dieser zweiten Transportstrecken 03 weist mindestens einen, vorzugsweise mehrere, z. B. drei parallel zueinander angeordnete umlaufende Transportriemen 13 auf, wobei diese Transportriemen 13 der jeweiligen zweiten Transportstrecke 03 ebenso wie die Transportriemen 08 der die erste Transportstrecke 02 bildenden Transporteinrichtung jeweils z. B. als ein insbesondere aus einem flexiblen Material bestehender Flachriemen ausgebildet sind und in ihrer bevorzugten Ausführung jeweils eine Perforierung aufweisen, durch welche Perforierung ein Sog an der Unterseite einer auf dem betreffenden Transportriemen 13 aufliegenden Blechtafel 01 ausgeübt wird, um die auf dem betreffenden Transportriemen 13 aufliegende Blechtafel 01 kraftschlüssig zu halten. Zur Erzeugung der Sogwirkung ist unterhalb des oder der Transportriemen 13 der jeweiligen zweiten Transportstrecke 03 mindestens ein Saugkasten angeordnet, wobei der betreffende Saugkasten mit einer Saugpumpe verbunden ist. Dieser Sog wirkt lokal eng begrenzt nur im Bereich der Transportriemen 13 der jeweiligen zweiten Transportstrecke 03 und ist - wie im Fall der Transportriemen 08 der die erste Transportstrecke 02 bildenden Transporteinrichtung - von der Steuereinheit 17 vorzugsweise bedarfsweise angeschaltet und/oder abgeschaltet oder zumindest anschaltbar und/oder abschaltbar. Die Transportriemen 13 der jeweiligen zweiten Transportstrecke 03 sind zur Ausführung ihres jeweiligen Umlaufs an ihren jeweiligen Enden an Umlenkrollen umgelenkt und von einem elektrischen zweiten Antrieb 21 angetrieben, wobei dieser zweite Antrieb 21 z. B. als ein Servomotor ausgebildet ist. Der Umlauf der Transportriemen 13 der jeweiligen zweiten Transportstrecke 03 erfolgt jeweils kontinuierlich oder getaktet. Wenn eine zweite Transportstrecke 03 mehrere parallel zueinander angeordnete Transportriemen 13 aufweist, so laufen diese Transportriemen 13 im Gleichlauf um.

In einer bevorzugten Ausführung der Förderanlage ist - wie in der Fig. 2 beispielhaft an einer der zweiten Transportstrecken 03 dargestellt - vorgesehen, dass die Transportriemen 13 der jeweiligen zweiten Transportstrecke 03 nur im Bereich des Minimalformats der zu transportierenden Blechtafel 01 angeordnet sind. Um entlang der zweiten Transportstrecke 03 einen sicheren Transport auch von Blechtafeln 01 bis zum Maximalformat sicher zu stellen, ist vorgesehen, dass in einem das Minimalformat der zu transportierenden Blechtafel 01 längsseitig zu den die Transportriemen 13 der jeweiligen zweiten Transportstrecke 03 überragenden Bereich bis zur Größe des Maximalformats ebenso wie im Fall der die erste Transportstrecke 02 bildenden Transporteinrichtung jeweils mindestens eine Platte 14 mit einem darin ausgebildeten Düsenfeld 23 zur Erzeugung eines Luftkissens angeordnet ist, so dass eine größer als ihr Minimalformat ausgebildete Blechtafel 01 einerseits durch den an den Transportriemen 13 der jeweiligen zweiten Transportstrecke 03 ausgeübten Sog kraftschlüssig gehalten wird und andererseits über der mindestens einen Platte 14 aufgrund des erzeugten Luftkissens schwebend transportiert wird. Beim Transport einer Blechtafel 01 in ihrem Minimalformat wird die Blaswirkung aus dem in der Platte 14 gebildeten Düsenfeld 23 abgeschaltet.

Es ist nun vorgesehen, dass die betreffende Platte 09 der die erste Transportstrecke 02 bildenden Transporteinrichtung in dem der jeweiligen zweiten Transportstrecke 03 zugewandten Randbereich R1 mindestens eine sich quer zur Transportrichtung T der Blechtafeln 01 geradlinig vorzugsweise bis zu dem nächstliegenden Transportriemen 08 der die erste Transportstrecke 02 bildenden Transporteinrichtung erstreckende Aussparung 16 aufweist, wobei jede dieser vorzugsweise schlitzförmig ausgebildeten Aussparungen 16 jeweils mit einem der Transportriemen 13 der jeweiligen zweiten Transportstrecke 03 in einer Flucht, d. h. entlang einer geraden Fluchtlinie angeordnet ist, wobei jeder mit der betreffenden Aussparung 16 fluchtende Transportriemen 13 der jeweiligen zweiten Transportstrecke 03 sich in die betreffende Aussparung 16 erstreckend angeordnet ist.

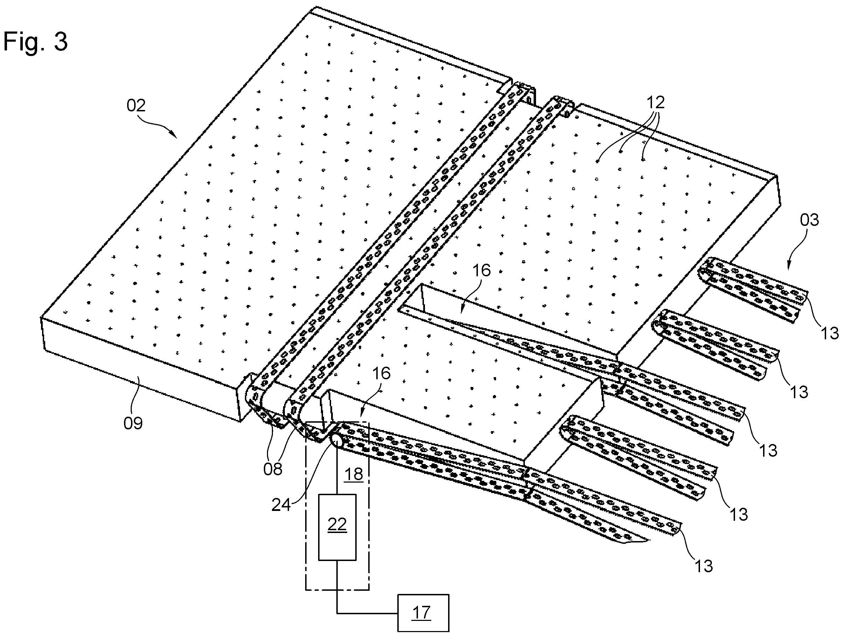

In einer besonders vorteilhaften Ausgestaltung der vorgeschlagenen Förderanlage ist - wie in der Fig. 3 angedeutet - mindestens eine von der Steuereinheit 17 gesteuerte Schwenkeinrichtung 18 vorgesehen, wobei die betreffende Schwenkeinrichtung 18 mindestens einen der sich in die betreffende Aussparung 16 erstreckenden Transportriemen 13 der jeweiligen zweiten Transportstrecke 03 derart schwenkend ausgebildet ist, dass der betreffende Transportriemen 13 beim Transport einer Blechtafel 01 entlang der ersten Transportstrecke 02 oder bei einer Verwendung der ersten Transportstrecke 02 als eine Durchtransportstrecke unterhalb einer Oberfläche der Platte 09 der die erste Transportstrecke 02 bildenden Transporteinrichtung abgesenkt wird. Eine Schwenkbewegung des sich in die betreffende Aussparung 16 erstreckenden Transportriemens 13 der jeweiligen zweiten Transportstrecke 03 ist z. B. dadurch realisiert, dass eine den betreffenden Transportriemen 13 an seinem in die betreffende Aussparung 16 ragenden Ende umlenkende Umlenkrolle 24 an einem Schwenkhebel angeordnet ist, wobei dieser Schwenkhebel durch einen von der Steuereinheit 17 gesteuerten Stellantrieb 22 in seiner jeweiligen Position einstellbar ist. In dem Betriebsfall, dass Blechtafeln 01 von einer z. B. als Anleger ausgebildeten dritten Bearbeitungsstation 07 über die erste Transportstrecke 02 direkt einer z. B. als eine Blechlackiermaschine ausgebildeten zweiten Bearbeitungsstation 06 zugeführt werden, bilden die sich in die betreffende Aussparung 16 erstreckenden Transportriemen 13 der jeweiligen zweiten Transportstrecke 03 für die zu transportierenden Blechtafeln 01 kein Hindernis, weil sich diese Transportriemen 13 zufolge ihrer von der Steuereinheit 17 gesteuerten Schwenkbewegung, d. h. Absenkung, dann unterhalb der Oberfläche der Platte 09 der die erste Transportstrecke 02 bildenden Transporteinrichtung befinden.

Um zu verhindern, dass sich eine von der jeweiligen zweiten Transportstrecke 03 der ersten Transportstrecke 02 zugeführte Blechtafel 01 z. B. an dem oder an den Transportriemen 08 der die erste Transportstrecke 02 bildenden Transporteinrichtung verhakt, ist vorzugsweise vorgesehen, dass die mindestens einen der Transportriemen 13 der jeweiligen zweiten Transportstrecke 03 schwenkende Schwenkeinrichtung 18 von der Steuereinheit 17 derart gesteuert ist, dass sie den betreffenden Transportriemen 13 beim Transport einer Blechtafel 01 in Richtung der ersten Transportstrecke 02 über eine Oberfläche des oder der Transportriemen 08 der die erste Transportstrecke 02 bildenden Transporteinrichtung hinaus um einen Abstand von wenigen Millimetern, z. B. um 1 mm bis 5 mm anhebt. Das Anheben einer der ersten Transportstrecke 02 zuzuführenden Blechtafel 01 kann anstelle mit einer Schwenkeinrichtung 18 oder zur Unterstützung der betreffenden Schwenkeinrichtung 18 z. B. auch durch mehrere in dem der jeweiligen zweiten Transportstrecke 03 zugewandten Randbereich R1 angeordnete jeweils als Blasdüsen ausgebildete Düsen 12 ausgeführt werden, wobei diese Blasdüsen vorzugsweise in einem Takt gesteuert Luft gegen die Unterseite der von der jeweiligen zweiten Transportstrecke 03 zugeführten Blechtafel 01 blasend ausgebildet sind.

In einer bevorzugten Ausführung der Förderanlage ist vorgesehen, dass die Steuereinheit 17 den oder die Transportriemen 08 der die erste Transportstrecke 02 bildenden Transporteinrichtung derart steuert, dass der oder diese Transportriemen 08 während einer Übernahme einer Blechtafel 01 von der jeweiligen zweiten Transportstrecke 03 stillsteht bzw. stillstehen. Nachdem eine von der jeweiligen zweiten Transportstrecke 03 zugeführte Blechtafel 01 von der die erste Transportstrecke 02 bildenden Transporteinrichtung übernommen worden ist, wird das Haltemittel, z. B. der durch die Perforierung in dem betreffenden Transportriemen 08 der die erste Transportstrecke 02 bildenden Transporteinrichtung wirkende Sog oder ein elektromagnetisches Haltemittel, von der Steuereinheit 17 eingeschaltet und der Umlauf des oder der Transportriemen 08 der die erste Transportstrecke 02 bildenden Transporteinrichtung wird fortgesetzt. Im Fall einer Anhebung des betreffenden Transportriemens 13 durch die Schwenkeinrichtung 18 bei der Übergabe einer Blechtafel 01 von der jeweiligen zweiten Transportstrecke 03 an die die erste Transportstrecke 02 bildende Transporteinrichtung wird diese Anhebung von der Steuereinheit 17 gesteuert wieder zurückgestellt, nachdem die von der jeweiligen zweiten Transportstrecke 03 zugeführte Blechtafel 01 von der die erste Transportstrecke 02 bildenden Transporteinrichtung übernommen worden ist.

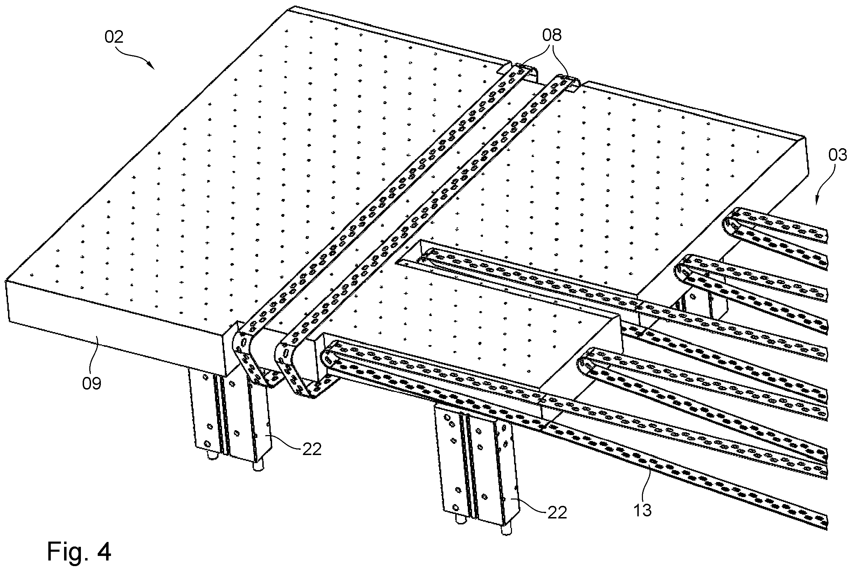

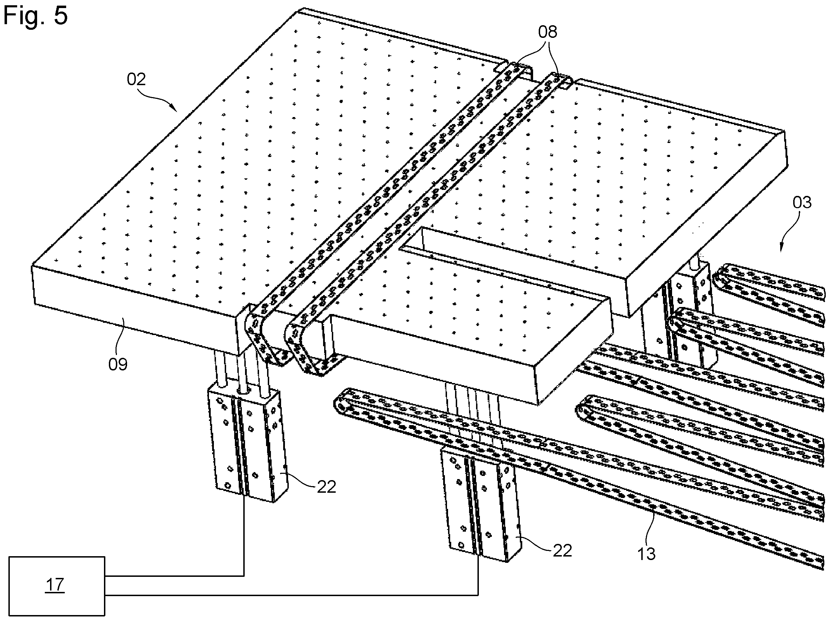

Die Figuren 4 und 5 zeigen beispielhaft eine zur Schwenkeinrichtung 18 alternative Ausführungsform der ersten Transportstrecke 02, bei der die als tischförmige Transporteinrichtung ausgebildete erste Transportstrecke 02 ausgehend von einer ersten Betriebsstellung (Fig. 4) durch eine von der Steuereinheit 17 gesteuerte Stellbewegung einer Hubeinrichtung in eine relativ zu den betreffenden Transportriemen 13 der jeweiligen zweiten Transportstrecke 03 höhenveränderte zweite Betriebsstellung (Fig. 5) bringbar ist. Die höhenvariable Einstellung der die als tischförmige Transporteinrichtung ausgebildete erste Transportstrecke 02 erfolgt z. B. durch Stellantriebe 22 der Hubeinrichtung, wobei die Stellantriebe 22 jeweils an zumindest einer der jeweiligen Platten 09 der die erste Transportstrecke 02 bildenden Transporteinrichtung angreifen.

Ein Vorteil der gefundenen Lösung besteht darin, dass die erste Transportstrecke 02 und die mindestens eine zweite Transportstrecke 03 derart ausgebildet sind, dass auf ihnen jeweils ohne eine Umrüstung Blechtafeln 01 unterschiedlichen Formats im Bereich von einem Minimalformat bis zu einem Maximalformat transportierbar sind. Dies wird insbesondere durch seitlich der jeweiligen Transportriemen 08; 13 angeordnete jeweils ein Luftkissen erzeugende Düsenfelder 11; 23 erreicht. Zudem können Blechtafeln 01 auch bei einem Fördervolumen von mehreren tausend Blechtafeln 01 pro Stunde sehr lagegenau, d. h. unter Beibehaltung ihrer jeweiligen Lage in der Transportebene, von einer zweiten Transportstrecke 03 an eine die erste Transportstrecke 02 bildende Transporteinrichtung übergeben werden. Die Beibehaltung der Lage der zu transportierenden Blechtafeln 01 führt bei einer z. B. in einer Blechlackiermaschine ausgeführten Weiterverarbeitung zu qualitativ besseren Ergebnissen und zu einer höheren Betriebssicherheit beim Transport dieser Blechtafeln 01 durch die Förderanlage.

### Bezugszeichenliste

- 01: Blechtafel
- 02: erste lineare Transportstrecke
- 03: zweite lineare Transportstrecke
- 04: erste Bearbeitungsstation
- 05: -
- 06: zweite Bearbeitungsstation
- 07: dritte Bearbeitungsstation
- 08: Transportriemen
- 09: Platte
- 10: -
- 11: Düsenfeld
- 12: Düsen
- 13: Transportriemen
- 14: Platte
- 15: -
- 16: Aussparung
- 17: Steuereinheit
- 18: Schwenkeinrichtung
- 19: erster Antrieb
- 20: -
- 21: zweiter Antrieb
- 22: Stellantrieb
- 23: Düsenfeld
- 24: Umlenkrolle
- B09: Breite
- M: Mittenbereich
- R1; R2: Randbereich
- T: Transportrichtung

## Patentansprüche

1. Förderanlage für einen liegenden Transport von Blechtafeln (01), aufweisend eine Steuereinheit (17), wobei diese Förderanlage in einer Transportebene eine erste lineare Transportstrecke (02) und mindestens eine zweite lineare Transportstrecke (03) aufweist, wobei jede der zweiten Transportstrecken (03) mindestens einen Transportriemen (13) für den Transport der Blechtafeln (01) aufweist, wobei die erste Transportstrecke (02) als eine tischförmige Transporteinrichtung ausgebildet ist und in der Transportebene der Blechtafeln (01) eine ebene Platte (09) aufweist, wobei diese Platte (09) in einem sich längs zur Transportrichtung (T) der Blechtafeln (01) erstreckenden streifenförmig ausgebildeten Mittenbereich (M) mindestens einen Transportriemen (08) und an beiden Seiten dieses Mittenbereichs (M) jeweils einen riemenfreien Randbereich (R1; R2) aufweist, wobei die mindestens eine zweite Transportstrecke (03) in der Transportebene rechtwinklig zur ersten Transportstrecke (02) angeordnet ist, **dadurch gekennzeichnet, dass** die Platte (09) der die erste Transportstrecke (02) bildenden Transporteinrichtung in dem der jeweiligen zweiten Transportstrecke (03) zugewandten Randbereich (R1) mindestens eine sich quer zur Transportrichtung (T) der Blechtafeln (01) geradlinig erstreckende Aussparung (16) aufweist, wobei jede dieser Aussparungen (16) jeweils mit einem der Transportriemen (13) der jeweiligen zweiten Transportstrecke (03) in einer Flucht angeordnet ist, wobei jeder mit der betreffenden Aussparung (16) fluchtende Transportriemen (13) der jeweiligen zweiten Transportstrecke (03) sich in die betreffende Aussparung (16) erstreckend angeordnet ist.

2. Förderanlage nach Anspruch 1, **dadurch gekennzeichnet, dass** mindestens eine von der Steuereinheit (17) gesteuerte Schwenkeinrichtung (18) vorgesehen ist, wobei die betreffende Schwenkeinrichtung (18) mindestens einen der sich in die betreffende Aussparung (16) erstreckenden Transportriemen (13) der jeweiligen zweiten Transportstrecke (03) derart schwenkend ausgebildet ist, dass der betreffende Transportriemen (13) beim Transport einer Blechtafel (01) entlang der ersten Transportstrecke (02) unterhalb einer Oberfläche der Platte (09) der die erste Transportstrecke (02) bildenden Transporteinrichtung abgesenkt wird.

3. Förderanlage nach Anspruch 2, **dadurch gekennzeichnet, dass** die mindestens einen der Transportriemen (13) der jeweiligen zweiten Transportstrecke (03) schwenkende Schwenkeinrichtung (18) von der Steuereinheit (17) derart gesteuert ist, dass sie den betreffenden Transportriemen (13) beim Transport einer Blechtafel (01) in Richtung der ersten Transportstrecke (02) über eine Oberfläche des oder der Transportriemen (08) der die erste Transportstrecke (02) bildenden Transporteinrichtung hinaus um einen Abstand bis zu 5 mm anhebt.

4. Förderanlage nach Anspruch 1, **dadurch gekennzeichnet, dass** eine Hubeinrichtung vorgesehen ist, wobei die Hubeinrichtung mindestens einen von der Steuereinheit (17) gesteuerten Stellantrieb (22) aufweist, wobei die als tischförmige Transporteinrichtung ausgebildete erste Transportstrecke (02) ausgehend von einer ersten Betriebsstellung durch eine Stellbewegung des mindestens einen Stellantriebs (22) in eine relativ zu den betreffenden Transportriemen (13) der jeweiligen zweiten Transportstrecke (03) höhenveränderte zweite Betriebsstellung bringbar ist.

5. Förderanlage nach Anspruch 1 oder 2 oder 3 oder 4, **dadurch gekennzeichnet, dass** in dem der jeweiligen zweiten Transportstrecke (03) zugewandten Randbereich (R1) der die erste Transportstrecke (02) bildenden Transporteinrichtung Düsen (12) angeordnet sind, wobei diese Düsen (12) Blasluft kontinuierlich oder in einem Takt gesteuert gegen die Unterseite der betreffenden von der jeweiligen zweiten Transportstrecke (03) zugeführten Blechtafel (01) blasend ausgebildet sind.

6. Förderanlage nach Anspruch 1 oder 2 oder 3 oder 4 oder 5, **dadurch gekennzeichnet, dass** die jeweilige zweite Transportstrecke (03) aus einer ersten Bearbeitungsstation (04) kommende Blechtafeln (01) abführend angeordnet ist und/oder dass die erste Transportstrecke (02) Blechtafeln (01) einer zweiten Bearbeitungsstation (06) zuführend angeordnet ist.

7. Förderanlage nach Anspruch 6, **dadurch gekennzeichnet, dass** am der zweiten Bearbeitungsstation (06) gegenüberliegenden Ende der ersten Transportstrecke (02) eine dritte Bearbeitungsstation (07) angeordnet ist.

8. Förderanlage nach Anspruch 1 oder 2 oder 3 oder 4 oder 5 oder 6 oder 7, **dadurch gekennzeichnet, dass** die Steuereinheit (17) den oder die Transportriemen (08) der die erste Transportstrecke (02) bildenden Transporteinrichtung derart steuert, dass der oder diese Transportriemen (08) während einer Übernahme einer Blechtafel (01) von der jeweiligen zweiten Transportstrecke (03) stillsteht bzw. stillstehen.

9. Förderanlage nach Anspruch 8, **dadurch gekennzeichnet, dass** die Steuereinheit (17) derart ausgebildet ist, dass sie ein Haltemittel zum Halten einer Blechtafel (01) auf dem oder den Transportriemen (08) der die erste Transportstrecke (02) bildenden Transporteinrichtung einschaltet und einen Umlauf des oder der Transportriemen (08) der die erste Transportstrecke (02) bildenden Transporteinrichtung fortsetzt und/oder einen angehobenen Transportriemen (13) der jeweiligen zweiten Transportstrecke (03) wieder absenkt, nachdem die betreffende von der jeweiligen zweiten Transportstrecke (03) zugeführte Blechtafel (01) von der die erste Transportstrecke (02) bildenden Transporteinrichtung übernommen worden ist.

10. Förderanlage nach Anspruch 1 oder 2 oder 3 oder 4 oder 5 oder 6 oder 7 oder 8 oder 9, **dadurch gekennzeichnet, dass** die erste Transportstrecke (02) und die mindestens eine zweite Transportstrecke (03) seitlich von ihren jeweiligen Transportriemen (08; 13) jeweils mindestens ein jeweils ein Luftkissen erzeugendes Düsenfeld (11; 23) aufweisen, so dass auf diesen Transportstrecken (02; 03) jeweils ohne eine Umrüstung Blechtafeln (01) unterschiedlichen Formats im Bereich von einem Minimalformat bis zu einem Maximalformat transportierbar sind.

## Claims

1. Conveyor system for horizontal transport of metal sheets (01), comprising a control unit (17), said conveyor system having in a transport plane a first linear transport section (02) and at least one second linear transport section (03), each of the second transport sections (03) having at least one transport belt (13) for transporting the metal sheets (01), the first transport section (02) being designed as a table-like transport device and having a flat tabletop (09) in the transport plane of the metal sheets (01), said tabletop (09) having at least one transport belt (08) in a strip-like middle region (M) that extends longitudinally to the transport direction (T) of the metal sheets (01) and having a belt-free edge region (R1; R2) on each side of said middle region (M), the at least one second transport section (03) being arranged in the transport plane at a right angle to the first transport section (02), **characterized in that** the tabletop (09) of the transport device forming the first transport section (02) has, in the edge region (R1) that faces the respective second transport section (03), at least one cutout (16) that extends in a straight line transversely to the transport direction (T) of the metal sheets (01), each of said cutouts (16) being arranged in line with one of the transport belts (13) of the respective second transport section (03), each transport belt (13) of the respective second transport section (03) that is in line with the respective recess (16) being arranged so as to extend into the respective recess (16).

2. Conveyor system according to claim 1, **characterized in that** at least one pivoting device (18) controlled by the control unit (17) is provided, the respective pivoting device (18) being designed to pivot at least one of the transport belts (13) of the respective second transport section (03) that extend into the respective recess (16) such that the respective transport belt (13) is lowered below a surface of the tabletop (09) of the transport device forming the first transport section (02) while a metal sheet (01) is being transported along the first transport section (02).

3. Conveyor system according to claim 2, **characterized in that** the pivoting device (18) that pivots at least one of the transport belts (13) of the respective second transport section (03) is controlled by the control unit (17) such that it raises the respective transport belt (13) by a distance of up to 5 mm above a surface of the transport belt(s) (08) of the transport device forming the first transport section (02) while a metal sheet (01) is being transported in the direction of the first transport section (02).

4. Conveyor system according to claim 1, **characterized in that** a lifting device is provided, the lifting device having at least one actuator (22) controlled by the control unit (17), the first transport section (02) designed as a table-like transport device being able to be brought, by an actuating movement of the at least one actuator (22), from a first operating position into a second operating position that has a changed height relative to the respective transport belts (13) of the respective second transport section (03).

5. Conveyor system according to claim 1 or 2 or 3 or 4, **characterized in that** nozzles (12) are arranged in the edge region (R1) of the transport device forming the first transport section (02), which edge region faces the respective second transport section (03), said nozzles (12) being designed to blow blown air continuously or in a controlled cycle against the underside of the respective metal sheet (01) supplied by the respective second transport section (03).

6. Conveyor system according to claim 1 or 2 or 3 or 4 or 5, **characterized in that** the respective second transport section (03) is arranged so as to lead away metal sheets (01) coming from a first processing station (04), and/or **in that** the first transport section (02) is arranged so as to supply metal sheets (01) to a second processing station (06).

7. Conveyor system according to claim 6, **characterized in that** a third processing station (07) is arranged at the opposite end of the first transport section (02) than the second processing station (06).

8. Conveyor system according to claim 1 or 2 or 3 or 4 or 5 or 6 or 7, **characterized in that** the control unit (17) controls the transport belt(s) (08) of the transport device forming the first transport section (02) such that the transport belt(s) (08) is/are at a standstill while a metal sheet (01) is being accepted by the respective second transport section (03).

9. Conveyor system according to claim 8, **characterized in that** the control unit (17) is designed such that it switches on a holding means for holding a metal sheet (01) on the transport belt(s) (08) of the transport device forming the first transport section (02) and continues a circulation of the transport belt(s) (08) of the transport device forming the first transport section (02) and/or lowers a raised transport belt (13) of the respective second transport section (03) again once the respective metal sheet (01) supplied by the respective second transport section (03) has been accepted by the transport device forming the first transport section (02).

10. Conveyor system according to claim 1 or 2 or 3 or 4 or 5 or 6 or 7 or 8 or 9, **characterized in that** the first transport section (02) and the at least one second transport section (03) each have, to the side of their respective transport belts (08; 13), at least one nozzle array (11; 23) that generates an air cushion such that metal sheets (01) of different formats in the range from a minimum format to a maximum format can be transported on said transport sections (02; 03) without the need for any modification.

## Revendications

1. Installation de convoyage pour un transport couché de tôles (01), présentant une unité de commande (17), dans laquelle cette installation de convoyage présente dans un plan de transport un premier trajet de transport linéaire (02) et au moins un deuxième trajet de transport linéaire (03), dans laquelle chacun des deuxièmes trajets de transport (03) présente au moins une courroie de transport (13) pour le transport des tôles (01), dans laquelle le premier trajet de transport (02) est réalisé sous la forme d'un dispositif de transport en forme de table et présente dans le plan de transport des tôles (01) une plaque (09) plate, dans laquelle cette plaque (09) présente dans une zone centrale (M) réalisée en forme de bande s'étendant longitudinalement par rapport à la direction de transport (T) des tôles (01) au moins une courroie de transport (08) et sur les deux côtés de cette zone centrale (M) respectivement une zone de bord (R1 ; R2) sans courroie, dans laquelle le au moins un deuxième trajet de transport (03) est disposé dans le plan de transport perpendiculairement au premier trajet de transport (02), **caractérisée en ce que** la plaque (09) du dispositif de transport formant le premier trajet de transport (02) présente dans la zone de bord (R1) tournée vers le deuxième trajet de transport (03) respectif au moins un évidement (16) s'étendant en ligne droite transversalement par rapport à la direction de transport (T) des tôles (01), dans laquelle chacun de ces évidements (16) est disposé en alignement respectivement avec une des courroies de transport (13) du deuxième trajet de transport (03) respectif, dans laquelle chaque courroie de transport (13) du deuxième trajet de transport (03) respectif en alignement avec l'évidement (16) concerné est disposée de manière à s'étendre dans l'évidement (16) concerné.

2. Installation de convoyage selon la revendication 1, **caractérisée en ce qu'**au moins un dispositif de pivotement (18) commandé par l'unité de commande (17) est prévu, dans laquelle le dispositif de pivotement (18) concerné est réalisé de manière à faire pivoter au moins une courroie de transport (13) du deuxième trajet de transport (03) respectif s'étendant dans l'évidement (16) concerné, de telle sorte que la courroie de transport (13) concernée lors du transport d'une tôle (01) le long du premier trajet de transport (02) est abaissée au-dessous d'une surface de la plaque (09) du dispositif de transport formant le premier trajet de transport (02).

3. Installation de convoyage selon la revendication 2, **caractérisée en ce que** le dispositif de pivotement (18) faisant pivoter au moins une des courroies de transport (13) du deuxième trajet de transport (03) respectif est commandé par l'unité de commande (17), de telle sorte qu'il soulève la courroie de transport (13) concernée d'une distance allant jusqu'à 5 mm lors du transport d'une tôle (01) dans la direction du premier trajet de transport (02) au-delà d'une surface de la ou des courroie(s) de transport (08) du dispositif de transport formant le premier trajet de transport (02).

4. Installation de convoyage selon la revendication 1, **caractérisée en ce qu'**un dispositif de levage est prévu, dans laquelle le dispositif de levage présente au moins un mécanisme de réglage (22) commandé par l'unité de commande (17), dans laquelle le premier trajet de transport (02) réalisé sous la forme d'un dispositif de transport en forme de table peut être amené à partir d'une première position de fonctionnement par un mouvement de réglage du au moins un mécanisme de réglage (22) dans une deuxième position de fonctionnement modifiée en hauteur par rapport à la courroie de transport (13) concernée du deuxième trajet de transport (03) respectif.

5. Installation de convoyage selon la revendication 1 ou 2 ou 3 ou 4, **caractérisée en ce que** dans la zone de bord (R1) du dispositif de transport formant le premier trajet de transport (02) tournée vers le deuxième trajet de transport (03) respectif sont disposées des buses (12), dans laquelle ces buses (12) sont réalisées de manière à souffler de l'air de soufflage en continu ou de manière commandée en cadence contre la face inférieure de la tôle (01) concernée amenée par le deuxième trajet de transport (03) respectif.

6. Installation de convoyage selon la revendication 1 ou 2 ou 3 ou 4 ou 5, **caractérisée en ce que** le deuxième trajet de transport (03) respectif est disposé de manière à évacuer les tôles (01) provenant d'une première station d'usinage (04) et/ou que le premier trajet de transport (02) est disposé de manière à amener les tôles (01) à une deuxième station d'usinage (06).

7. Installation de convoyage selon la revendication 6, **caractérisée en ce qu'**une troisième station d'usinage (07) est disposée sur l'extrémité du premier trajet de transport (02) opposée à la deuxième station d'usinage (06).

8. Installation de convoyage selon la revendication 1 ou 2 ou 3 ou 4 ou 5 ou 6 ou 7, **caractérisée en ce que** l'unité de commande (17) commande la ou les courroie(s) de transport (08) du dispositif de transport formant le premier trajet de transport (02), de telle sorte que la ou ces courroies de transport (08) s'arrête ou s'arrêtent pendant une réception d'une tôle (01) par le deuxième trajet de transport (03) respectif.

9. Installation de convoyage selon la revendication 8, **caractérisée en ce que** l'unité de commande (17) est réalisée de telle sorte qu'elle active un moyen de retenue pour retenir une tôle (01) sur la ou les courroies de transport (08) du dispositif de transport formant le premier trajet de transport (02) et poursuit une circulation de la ou des courroies de transport (08) du dispositif de transport formant le premier trajet de transport (02) et/ou abaisse à nouveau une courroie de transport (13) soulevée du deuxième trajet de transport (03) respectif, après que la tôle (01) concernée amenée par le deuxième trajet de transport (03) respectif a été réceptionnée par le dispositif de transport formant le premier trajet de transport (02).

10. Installation de convoyage selon la revendication 1 ou 2 ou 3 ou 4 ou 5 ou 6 ou 7 ou 8 ou 9, **caractérisée en ce que** le premier trajet de transport (02) et le au moins un deuxième trajet de transport (03) présentent à côté de leur courroie de transport (08 ; 13) respective à chaque fois au moins un champ de buses (11 ; 23) produisant respectivement un coussin d'air, de sorte que des tôles (01) d'un format différent dans la plage d'un format minimal à un format maximal peuvent être transportées sur ces trajets de transport (02 ; 03) à chaque fois sans rééquipement.
